# EUROPÄISCHE PATENTSCHRIFT

(11) **EP 2 954 198 B1**
(45) Veröffentlichungstag und Bekanntmachung des Hinweises auf die Patenterteilung: **26.04.2017**
(21) Anmeldenummer: 14713042.1
(22) Anmeldetag: 06.02.2014
(51) Int. Cl.: F03D 80/00

(54) **ÜBERWACHUNGSVORRICHTUNG FÜR EINE WINDKRAFTANLAGE**
MONITORING DEVICE FOR A WIND TURBINE
DISPOSITIF DE CONTRÔLE POUR ÉOLIENNE

(30) Priorität: 07.02.2013 DE 102013101241
(43) Veröffentlichungstag der Anmeldung: 16.12.2015
(73) Patentinhaber: 2-B Energy Holding B.V., 7556 PE Hengelo (NL)
(72) Erfinder: JAKOBSSON, Johan Mikael, Grants Pass, Oregon 97527 (US); PEELS, Huibertus, NL-7631 HS Ootmarsum (NL); VAN SLOOTEN, Poul, NL-7701MP Dedemsvaart (NL)
(74) Vertreter: Bossmeyer, Jörg Peter
(86) Internationale Anmeldenummer: PCT/EP2014/052378
(87) Internationale Veröffentlichungsnummer: WO 2014/122240

(56) Entgegenhaltungen:
- WO-A1-02/079646
- JP-A- 2005 239 357
- KR-A- 20110 026 203

## Beschreibung

Die Erfindung betrifft eine Überwachungsvorrichtung für eine Windkraftanlage, mit wenigstens einer in einem Windkraftanlagenmaschinenhaus angeordneten Kamera, mittels welcher Bilder aus dem Inneren des Maschinenhauses aufnehmbar und Form von Bildinformation tragenden Signalen an wenigstens eine Überwachungsstation übertragbar sind.

Aus der EP 1 373 723 B1 ist ein Verfahren zur Überwachung des Inneren einer Windenergieanlage bekannt, bei dem elektrische und/oder mechanische Einheiten überwacht werden und ein Schallaufnehmer den dort entstehenden Schall aufnimmt, wobei ein optischer Aufnehmer auf den Ort entstehenden Schalls gerichtet, verfahren, verschwenkt und/oder eingestellt wird. Der optische Aufnehmer ist auf einer Schiene fahrbar angeordnet, die einen geschlossenen Ring bildet, sodass mit der Kamera eine Innenansicht der gesamten Gondel der Windenergieanlage erstellt werden kann.

Aufwändig an der Realisierung dieses Verfahrens ist insbesondere das Montieren der Schienen, die ausschließlich für das Bewegen der Kamera vorgesehen sind.

Ausgehend hiervon liegt der Erfindung die Aufgabe zugrunde, den für die Verfahrbarkeit der Kamera erforderlichen Zusatzaufwand reduzieren zu können.

Diese Aufgabe wird erfindungsgemäß durch eine Überwachungsvorrichtung nach Anspruch 1 gelöst. Bevorzugte Weiterbildungen der Erfindung sind in den Unteransprüchen und in der nachfolgenden Beschreibung gegeben.

Die erfindungsgemäße Überwachungsvorrichtung für eine Windkraftanlage weist wenigstens eine in einem Windkraftanlagenmaschinenhaus angeordnete Kamera, mittels welcher Bilder aus dem Inneren des Maschinenhauses aufnehmbar und Form von Bildinformation tragenden Signalen an wenigstens eine Überwachungsstation übertragbar sind, und einen in dem Maschinenhaus montierten und die Kamera tragenden Brückenkran zum Heben von Lasten auf, mittels welchem die Kamera in wenigstens zwei translatorische Richtungen in dem Maschinenhaus bewegbar ist.

Erfindungsgemäß wird somit der zum Heben von Lasten vorgesehene Brückenkran zum Bewegen der Kamera genutzt, sodass auf die Installation eines zusätzlichen Kamerabewegungssystems vollständig oder zumindest weitegehend verzichtet werden kann. Insbesondere sind mittels des Brückenkrans Lasten hebbar. Die erfindungsgemäße Überwachungsvorrichtung kann auch als Hebe- und Überwachungsvorrichtung oder einfach nur als Vorrichtung bezeichnet werden. Ein Maschinenhaus mit einem Brückenkran ist bereits aus der KR 1020110026203 A bekannt.

Bevorzugt verläuft die erste translatorische Richtung quer oder näherungsweise quer zur zweiten translatorischen Richtung. Insbesondere handelt es sich bei den translatorischen Richtungen um horizontale Richtungen. Somit ist die Kamera mittels des Brückenkrans in jede oder in nahezu jede Position einer durch das Maschinenhaus und/oder durch den Bewegungsbereich des Brückenkrans begrenzten, horizontalen Ebene bewegbar. Obwohl eine oder mehrere Positionen der Ebene möglicherweise durch ein oder mehrere in dem Maschinenhaus vorgesehene Hindernisse versperrt sein können, kann mit der Kamera eine Innenansicht des gesamten oder nahezu des gesamten Maschinenhauses gewonnen werden.

Die Überwachungsstation kann in oder in der Nähe der oder einer das Maschinenhaus umfassenden Windkraftanlage oder entfernt von dieser vorgesehen sein. Ferner ist es möglich, die oder eine Überwachungsstation auf einem Schiff oder in einem Hubschrauber vorzusehen. Dies ist insbesondere bei einer Offshore-Windkraftanlage sinnvoll. Die Bildinformation tragenden Signale sind z.B. per Funk und/oder kabelgebunden, beispielsweise über optische oder elektrische Leitungen, an die Überwachungsstation übertragbar. Insbesondere handelt es sich bei den Signalen um optische, elektrische oder elektromagnetische Signale.

Gemäß einer Ausgestaltung umfasst der Brückenkran eine in eine erste der translatorischen Richtungen bewegbare Kranbrücke und eine in eine zweite der translatorischen Richtungen bewegbare Laufkatze mit einem Hubwerk, mittels welchem ein Hebemittel relativ zu der Laufkatze bewegbar ist. Die Kamera ist insbesondere an der Laufkatze, an dem Hubwerk oder an dem Hebemittel befestigt. Das Hebemittel oder zumindest ein Teil des Hebemittels ist bevorzugt mittels des Hubwerks in eine dritte translatorische Richtung bewegbar.

Die Kamera kann als Panoramakamera mit einem möglichst großen Bildwinkel ausgebildet sein. Der Bildwinkel liegt z.B. bei 120° und kann bei einigen Kameramodellen sogar bis zu 360° betragen. Obwohl mit einer Panoramakamera ein guter Überblick über das Innere des Maschinenhauses gewinnbar ist, kann das Bild verzerrt sein, was ein genaueres Betrachten von Details erschwert.

Gemäß einer Weiterbildung ist die Kamera an dem Brückenkran, insbesondere an der Laufkatze, an dem Hubwerk oder an dem Hebemittel, mittels einer Bewegungseinrichtung befestigt, mittels welcher die Kamera relativ zu dem Brückenkran, insbesondere relativ zu der Laufkatze und/oder dem Hubwerk und/oder dem Hebemittel, bewegbar ist. Vorzugsweise handelt es sich bei der Bewegungseinrichtung um eine Schwenkeinrichtung, mittels welcher die Kamera relativ zu dem Brückenkran, insbesondere relativ zu der Laufkatze und/oder dem Hubwerk und/oder dem Hebemittel, schwenkbar ist. Hierdurch ist das Sichtfeld der Kamera erweiterbar, sodass insbesondere auf eine Panoramakamera verzichtet werden kann. Gleichwohl ist es auch möglich, die Bewegungseinrichtung in Kombination mit einer Panoramakamera einzusetzen.

An dem Hebemittel ist bevorzugt ein Anhängemittel, beispielsweise in Form eines Hakens, vorgesehen, an welches eine Last angehängt werden kann. Ist die Kamera oberhalb des Anhängemittels, beispielsweise an der Laufkatze oder an dem Hubwerk, angeordnet, ist es mittels der Kamera möglich, das Heben und/oder Senken und/oder Bewegen einer Last durch den Brückenkran beobachten zu können.

Gemäß einer Weiterbildung ist die Kamera an dem Hebemittel, beispielsweise an einem unteren Ende oder Bereich des Hebemittels, befestigt und mittels des Hubwerks in eine oder die dritte translatorische Richtung bewegbar. Insbesondere ist die dritte translatorische Richtung eine vertikale Richtung. Somit ist die Kamera mittels des Brückenkrans in jede oder in nahezu jede freie Position innerhalb des Maschinenhauses bewegbar. Die Kamera kann z.B. an das Anhängemittel angehängt sein. Alternativ kann das Anhängemittel aber auch durch die Kamera ersetzt werden. Insbesondere umfasst die Kamera ein eigenes Anhängemittel oder ist mittels eines speziellen Kamera-Anhängemittels an dem Hebemittel befestigt.

Die dritte translatorische Richtung verläuft insbesondere quer oder näherungsweise quer zu der ersten translatorischen Richtung und zu der zweiten translatorischen Richtung. Bevorzugt spannen die drei translatorischen Richtungen ein dreidimensionales Koordinatensystem auf, bei welchem es sich insbesondere um ein orthogonales Koordinatensystem handelt.

Ist das Hebemittel relativ steif und weist die Kamera ein geringes Eigengewicht auf, kann der Fall eintreten, dass die Kamera in einer ungünstigen Lage an dem Hebemittel verharrt. Bevorzugt ist die Kamera daher mit einem zusätzlichen Gewicht ausgestattet und/oder unter Zwischenschaltung eines zusätzlichen Gewichts an dem Hebemittel befestigt. Ist die Bewegungseirichtung vorhanden, so kann diese mit dem oder einem zusätzlichen Gewicht ausgestattet und/oder unter Zwischenschaltung des oder eines zusätzlichen Gewichts an dem Hebemittel befestigt sein. Gegebenenfalls reicht als zusätzliches Gewicht aber schon das Eigengewicht der Bewegungseirichtung aus.

Gemäß einer Weiterbildung ist das Hebemittel flexibel ausgebildet. Beispielsweise ist oder umfasst das Hebemittel ein Zugmittel, insbesondere ein flexibles Zugmittel. Bevorzugt ist oder umfasst das Hebemittel ein Seil, eine Kette oder ein anderes Zugmittel, welches vorzugsweise flexibel ist. Insbesondere umfasst das Hubwerk eine Winde, mittels welcher das Hebemittel aufwickelbar und/oder abwickelbar ist.

Die Kranbrücke ist bevorzugt im Abstand zum Boden des Maschinenhauses an einer oder mehreren, vorzugsweise zwei, maschinenhausfesten Führungsschienen in die erste translatorische Richtung bewegbar geführt. Der Abstand ist insbesondere ein vertikaler Abstand und/oder Höhenabstand. Vorteilhaft ist Kranbrücke oberhalb des Bodens des Maschinenhauses an der einen oder den mehreren, vorzugsweise den beiden, maschinenhausfesten Führungsschienen in die erste translatorische Richtung bewegbar geführt. Insbesondere erstecken sich vom Boden des Maschinenhauses mehrere Stützen vertikal oder näherungsweise vertikal nach oben, welche die maschinenhausfesten Führungsschienen tragen. Bei den Stützen handelt es sich vorzugsweise um Stützpfeiler. Ferner ist die Laufkatze bevorzugt an einer oder mehreren, vorzugsweise zwei, kranbrückenfesten Führungsschienen in die zweite translatorische Richtung bewegbar geführt.

Vorteilhaft ist die Kranbrücke mittels eines Brückenantriebs in die erste translatorische Richtung relativ zu dem Maschinenhaus bewegbar. Bevorzugt ist ferner die Laufkatze mittels eines Laufkatzenantriebs in die zweite translatorische Richtung relativ zu der Kranbrücke bewegbar. Vorzugsweise umfasst das Hubwerk einen Hubantrieb, mittels welchem das Hebemittel relativ zu der Laufkatze bewegbar ist, insbesondere in die dritte translatorische Richtung.

Gemäß einer Ausgestaltung ist eine Steuereinrichtung vorgesehen, mittels welcher der Brückenkran steuerbar und/oder bewegbar ist. Insbesondere ist mittels der Steuereinrichtung somit auch die Kamera bewegbar. Bevorzugt sind zum Steuern und/oder Bewegen des Brückenkrans und/oder der Kamera Kransteuersignale von der Steuereinrichtung an den Brückenkran, insbesondere an die Antriebe des Brückenkrans, übertragbar. Die Steuereinrichtung ist insbesondere eine lokale Steuereinrichtung und in dem oder in der Nähe des Maschinenhauses und/oder in oder an einer oder der das Maschinenhaus umfassenden Windkraftanlage angeordnet.

Bevorzugt ist eine Kommunikationseinrichtung vorgesehen, die mit der Kamera in Kommunikationsverbindung steht, sodass die Bildinformation tragenden Signale von der Kamera an die Kommunikationseinrichtung übertragbar sind. Die Kommunikationseinrichtung ist insbesondere eine lokale Kommunikationseinrichtung und in dem oder in der Nähe des Maschinenhauses und/oder in oder an einer oder der das Maschinenhaus umfassenden Windkraftanlage angeordnet. Die Kommunikationseinrichtung ist bevorzugt mit der Steuereinrichtung verbunden und/oder steht mit dieser in Kommunikationsverbindung. Die Kommunikation zwischen der Kommunikationseinrichtung und der Steuereinrichtung erfolgt z.B. per Funk und/oder kabelgebunden, beispielsweise über optische oder elektrische Leitungen. Insbesondere umfasst die Steuereinrichtung die Kommunikationseinrichtung. Bevorzugt steht die Kommunikationseinrichtung auch mit der Bewegungseinrichtung in Kommunikationsverbindung, sodass von der Kommunikationseinrichtung an die Bewegungseinrichtung Bewegungssteuersignale übertragbar sind, mittels welchen die Bewegungseinrichtung steuerbar und/oder bewegbar ist. Die Kommunikation zwischen der Kommunikationseinrichtung und der Kamera und/oder der Bewegungseinrichtung erfolgt z.B. per Funk und/oder kabelgebunden, beispielsweise über optische oder elektrische Leitungen.

Bevorzugt ist eine Fernsteuereinrichtung vorgesehen, mittels welcher der Brückenkran von der Überwachungsstation aus fernsteuerbar und somit die Kamera bewegbar ist. Die Fernsteuereinrichtung steht dazu, insbesondere über die Kommunikationseinrichtung, mit der Steuereinrichtung in Kommunikationsverbindung. Diese Kommunikation erfolgt z.B. per Funk und/oder kabelgebunden, beispielsweise über optische oder elektrische Leitungen.

Die Fernsteuereinrichtung steht insbesondere mit der Kommunikationseinrichtung und/oder mit der Steuereinrichtung, bevorzugt unter Zwischenschaltung der Kommunikationseinrichtung, in Kommunikationsverbindung. Diese Kommunikation erfolgt z.B. per Funk und/oder kabelgebunden, beispielsweise über optische oder elektrische Leitungen. Bevorzugt sind mittels der Kommunikationseinrichtung die Bildinformation tragenden Signale an die Fernsteuereinrichtung übertragbar. Die Fernsteuereinrichtung umfasst insbesondere einen Bildschirm, mittels welchem die von der Kamera aufgenommenen Bilder darstellbar sind. Ferner sind mittels der Fernsteuereinrichtung vorzugsweise Fernsteuersignale an die Kommunikationseinrichtung und/oder an die Steuereinrichtung, bevorzugt unter Zwischenschaltung der Kommunikationseinrichtung, übertragbar. Mittels der Fernsteuersignale sind insbesondere die Steuereinrichtung und/oder die Kommunikationseinrichtung und/oder der Brückenkran und/oder die Bewegungseinrichtung steuerbar. Bevorzugt sind aus den Fernsteuersignalen die Kransteuersignale erzeugbar, vorzugsweise mittels der Steuereinrichtung und/oder mittels der Kommunikationseinrichtung. Vorteilhaft sind aus den Fernsteuersignalen die Bewegungssteuersignale erzeugbar, vorzugsweise mittels der Steuereinrichtung und/oder mittels der Kommunikationseinrichtung. Die Fernsteuersignale umfassen insbesondere die Kransteuersignale und/oder die Bewegungssteuersignale und/oder Informationen, welche die Kransteuersignale und/oder die Bewegungssteuersignale charakterisieren.

Die Fernsteuereinrichtung umfasst bevorzugt ein Eingabemittel, mittels welchem Fernsteuerdaten in die Fernsteuereinrichtung eingebbar sind. Das Eingabemittel umfasst z.B. eine Tastatur und/oder eine Computer-Maus und/oder einen Joystick und/oder eine Eingabe-Schnittstelle und/oder andere Eingabemittel. Ergänzend oder alternativ sind von der Fernsteuereinrichtung z.B. selbst Fernsteuerdaten erzeugbar, beispielsweise durch ein in der Fernsteuereinrichtung ablaufendes Computerprogramm. Insbesondere umfasst die Fernsteuereinrichtung einen Computer. Vorzugsweise sind mittels der Fernsteuereinrichtung die Fernsteuerdaten in Form der Fernsteuersignale an die Kommunikationseinrichtung und/oder an die Steuereinrichtung, insbesondere unter Zwischenschaltung der Kommunikationseinrichtung, übertragbar. Die Fernsteuerdaten umfassen insbesondere Informationen, welche die Kransteuersignale und/oder die Bewegungssteuersignale charakterisieren.

Mittels der Kamera sind insbesondere Bilder im sichtbaren Spektrum aufnehmbar. Ergänzend oder alternativ ist es möglich, dass mittels der Kamera Bilder im nicht sichtbaren Spektrum, insbesondere im Infrarotspektrum, aufnehmbar sind. Bevorzugt ist in dem Maschinenhaus wenigstens eine Beleuchtungseinrichtung vorgesehen, mittels welcher das Maschinenhaus oder zumindest ein Bereich des Maschinenhauses, insbesondere mit sichtbarem Licht, beleuchtbar ist.

Gemäß einer Weiterbildung ist die Kamera mit einem Mikrofon ausgestattet, mittels welchem in dem Maschinenhaus auftretende Geräusche aufnehmbar und Form von Audioinformation tragenden Signalen an die Überwachungsstation übertragbar sind. Die Übertragung dieser Signale erfolgt insbesondere analog zu der Übertragung der Bildinformation tragenden Signale. Durch eine Geräuschanalyse sind viele Fehlfunktionen von in dem Maschinenhaus angeordneten Geräten und Einrichtungen schnell erfassbar.

Das Maschinenhaus ist bevorzugt auf einer Tragstruktur angeordnet. Die Tragstruktur umfasst oder bildet bevorzugt einen Turm, der insbesondere mit einem Fundament oder einer Gründung im Erdboden oder Seeboden verankert ist. Auf der Tragstruktur ist bevorzugt ein Maschinenträger angeordnet, der das Maschinenhaus trägt. Der Maschinenträger kann einen Teil, z.B. den Boden, des Maschinenhauses bilden.

An dem Maschinenträger und/oder in dem Maschinenhaus ist bevorzugt ein durch Wind um eine Rotorachse drehbarer Rotor drehbar gelagert. Insbesondere ist die Rotorachse horizontal oder näherungsweise horizontal ausgerichtet. Bevorzugt ist die Rotorachse aber gegenüber der Horizontalen geringfügig geneigt. Vorteilhaft ist der Rotor an der Lee-Seite des Maschinenträgers angeordnet. Alternativ kann der Rotor aber auch an der Luv-Seite des Maschinenträgers angeordnet sein.

Der Rotor umfasst bevorzugt eine Rotornabe und mehrere an der Rotornabe gelagerte Rotorblätter, die sich insbesondere quer oder näherungsweise quer zur Rotorachse von der Rotornabe wegerstrecken. Die Anzahl der Rotorblätter beträgt bevorzugt zwei, wenigstens zwei, drei oder wenigstens drei. Insbesondere sind die Rotorblätter rings der Rotorachse gleichmäßig verteilt angeordnet.

In dem Maschinenhaus ist bevorzugt ein elektrischer Generator angeordnet, der von dem Rotor antreibbar ist. Insbesondere ist der Generator mit einer Rotorwelle des Rotors verbunden. Zwischen den Generator und den Rotor und/oder zwischen den Generator und die Rotorwelle kann ein Rotorgetriebe geschaltet sein.

Die Erfindung betrifft ferner die Verwendung eines in einem Maschinenhaus einer Windkraftanlage montierten und zum Heben von Lasten vorgesehen Brückenkrans zum Bewegen einer in dem Maschinenhaus angeordneten Kamera in wenigstens zwei translatorische Richtungen, wobei mittels der Kamera Bilder aus dem Inneren des Maschinenhauses aufgenommen und Form von Bildinformation tragengenden Signalen an wenigstens eine Überwachungsstation übertragen werden. Die Verwendung kann gemäß allen im Zusammenhang mit der erfindungsgemäßen Überwachungsvorrichtung erläuterten Ausgestaltungen weitergebildet sein.

Durch die Erfindung ist es möglich, in dem Maschinenhaus installierte Geräte und Einrichtungen zu überwachen. Ferner ist ein bestimmungsgemäßer Betrieb des Brückenkrans als Lasthebe- und Bewegungsmittel überwachbar.

Die Erfindung wird nachfolgend anhand einer bevorzugten Ausführungsform unter Bezugnahme auf die Zeichnung beschrieben. In der Zeichnung zeigen:
Fig. 1 eine schematische Seitenansicht einer Windkraftanlage,
Fig. 2 eine schematische Seitenansicht des unverkleideten Maschinenhauses der Windkraftanlage nach Fig. 1 mit einer Überwachungsvorrichtung gemäß einer Ausführungsform der Erfindung,
Fig. 3 eine schematische Draufsicht auf das unverkleidete Maschinenhaus und
Fig. 4 eine schematische Vorderansicht einer Laufkatze gemäß einer Abwandlung der Ausführungsform.

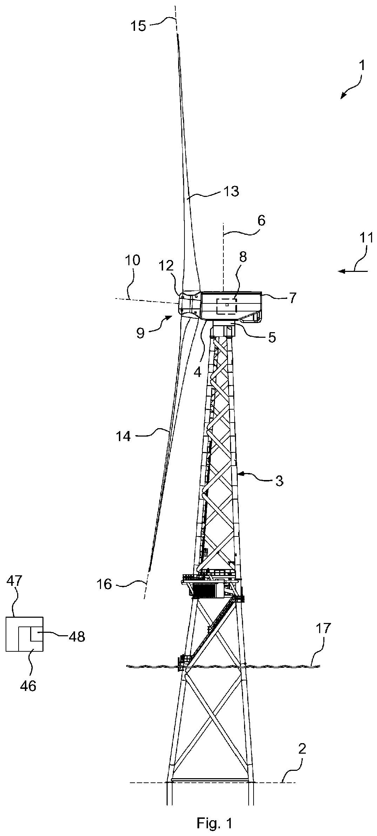

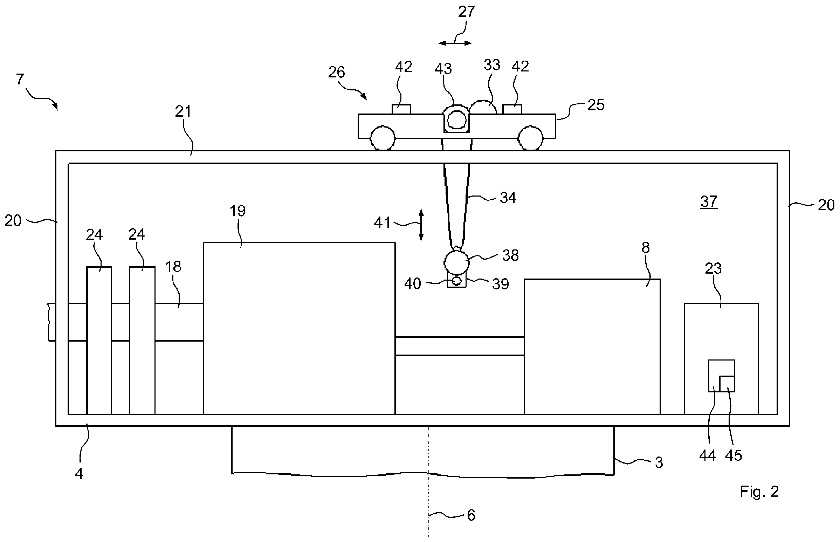

Aus Fig. 1 ist eine schematische Seitenansicht einer Windkraftanlage 1 ersichtlich, die im Meer angeordnet und im Meeresboden 2 verankert ist. Der Wasserspiegel des Meeres ist schematisch angedeutet und mit dem Bezugszeichen 17 gekennzeichnet. Die Windkraftanlage 1 umfasst eine Tragstruktur 3 in Form eines Gitterturms, auf der ein Maschinenträger 4 über ein Azimutlager 5 um eine vertikale Gierachse 6 drehbar gelagert ist. Der Maschinenträger 4 trägt ein Maschinenhaus 7, in dem ein elektrischer Generator 8 angeordnet ist. An dem Maschinenträger 4 ist ein Rotor 9 um eine Rotorachse 10 drehbar gelagert, die quer oder näherungsweise quer zur Gierachse 6 verläuft. Vorzugsweise ist die Rotorachse 10 aber geringfügig gegenüber der Horizontalen geneigt. Der Rotor 9 umfasst eine Rotornabe 12, an der zwei Rotorblätter 13 und 14 um ihre jeweilige Blattachse 15 bzw. 16 drehbar gelagert sind, wobei die Blattachsen 15 und 16 quer oder näherungsweise quer zur Rotorachse 10 verlaufen. Die Rotornabe 12 ist drehstarr mit einer Rotorwelle 18 (siehe Fig. 2) verbunden, mittels welcher der Rotor 9 unter Zwischenschaltung eines Getriebes 19 (siehe Fig. 2) mit dem Generator 8 verbunden ist. Der Rotor 9 wird durch Wind 11 um seine Rotorachse 10 gedreht und treibt den Generator 8 an.

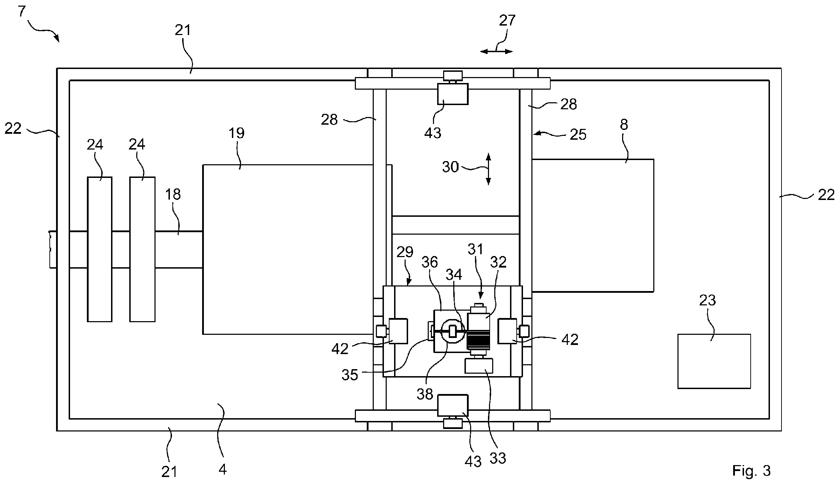

Aus Fig. 2 ist eine schematische Seitenansicht des unverkleideten Maschinenhauses 7 der Windkraftanlage 1 ersichtlich, wobei Fig. 3 eine schematische Draufsicht auf das unverkleidete Maschinenhaus 7 zeigt, in dem ferner ein Schaltschrank 23 und zwei Lager 24 angeordnet sind, mittels welchen die Rotorwelle 18 um die Rotorachse 10 drehbar am Maschinenträger 4 gelagert ist. Von dem Maschinenträger 4 erstrecken sich mehrere als Stützpfeiler ausgebildete Stützen 20 vertikal nach oben, die zwei Längsträger 21 und zwei Querträger 22 tragen. Die Längsträger 21 bilden Führungsschienen, auf denen eine Kranbrücke 25 eines Brückenkrans 26 in einer horizontalen Längsrichtung 27 bewegbar geführt ist. Die Kranbrücke 25 umfasst zwei querlaufende Führungsschienen 28, auf denen eine Laufkatze 29 in einer horizontalen Querrichtung 30 bewegbar geführt ist. Die Laufkatze 29 trägt ein Hubwerk 31 mit einer Seilwinde 32 und einem Elektromotor 33, mittels welchem die Seilwinde 32 antreibbar ist. Auf die Seilwinde 32 ist ein Seil 34 mit einem Ende teilweise aufgewickelt, dessen anderes Ende mittels einer Seilbefestigung 35 an der Laufkatze 29 festgelegt ist. Das Seil 34 erstreckt sich durch ein in der Laufkatze 29 vorgesehenes Bodenfenster 36 nach unten hindurch und in den Innenraum 37 des Maschinenhauses 7 hinein. An dem Seil 34 ist ein Gewicht 38 aufgehängt, welches eine Schwenkeinrichtung 39 und eine Kamera 40 trägt, die mittels der Schwenkeinrichtung 39 schwenkbar ist. Durch Drehen der Seilwinde 32 mittels des Elektromotors 33 ist die Kamera 40 in einer vertikalen Hubrichtung 41 bewegbar. An der Laufkatze 29 sind Elektromotoren 42 vorgesehen, mittels welchen die Laufkatze 29 in Querrichtung 30 bewegbar ist. Ferner sind an der Kranbrücke 25 Elektromotoren 43 vorgesehen, mittels welchen die Kranbrücke 25 in Längsrichtung 27 bewegbar ist.

In dem Schaltschrank 23 ist eine Steuereinrichtung 44 vorgesehen, mittels welcher die Elektromotoren 33, 42 und 43 steuerbar sind. Ferner umfasst die Steuereinrichtung 44 eine Kommunikationseinrichtung 45 die mit der Kamera 40, mit der Schwenkeinrichtung 39 und mit einer Fernsteuereinrichtung 46 kommunizieren kann, die in einer entfernten Überwachungsstation 47 angeordnet ist (siehe Fig. 1). Die Kamera 40 nimmt Bilder vom Innenraum 37 des Maschinenträgers auf und übermittelt diese in Form von Bildinformation tragenden Signalen an die Kommunikationseinrichtung 45, welche diese an die Fernsteuereinrichtung 46 überträgt. Die Fernsteuereinrichtung 46 umfasst einen Bildschirm 48 mittels welchem die von der Kamera 40 aufgenommenen Bilder darstellbar sind. Ferner überträgt die Fernsteuereinrichtung 46 Fernsteuersignale zum Steuern des Brückenkrans 26 und der Schwenkeinrichtung 39 an die Kommunikationseinrichtung 45, die diese Signale an die Steuereinrichtung 44 und an die Schwenkeinrichtung 39 überträgt, sodass der Brückenkran 26 und die Schwenkeinrichtung 39 mittels der Fernsteuereinrichtung 46 von der Überwachungsstation 47 aus steuerbar sind.

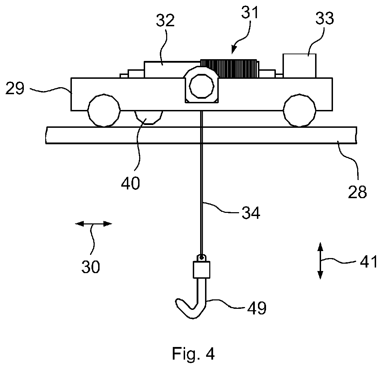

Aus Fig. 4 eine schematische Vorderansicht der Laufkatze 29 gemäß einer Abwandlung ersichtlich, wobei die Kamera 40 nicht am Seil 34 aufgehängt, sondern an der Laufkatze 29 befestigt ist. Die Kamera 40 gemäß Fig. 4 ist eine Panoramakamera, sodass auf die Schwenkeinrichtung 39 verzichtet wurde. An dem Seil 34 ist anstelle der Kamera ein Haken 49 zum Tragen von Lasten aufgehängt.

### Bezugszeichenliste

- 1: Windkraftanlage
- 2: Meeresboden
- 3: Tragstruktur
- 4: Maschinenträger
- 5: Azimutlager
- 6: Gierachse
- 7: Maschinenhaus
- 8: elektrischer Generator
- 9: Rotor
- 10: Rotorachse
- 11: Wind
- 12: Rotornabe
- 13: Rotorblatt
- 14: Rotorblatt
- 15: Blattachse
- 16: Blattachse
- 17: Wasserspiegel
- 18: Rotorwelle
- 19: Getriebe
- 20: Stütze
- 21: Längsträger
- 22: Querträger
- 23: Schaltschrank
- 24: Lager
- 25: Kranbrücke
- 26: Brückenkran
- 27: Längsrichtung
- 28: Führungsschienen der Kranbrücke
- 29: Laufkatze
- 30: Querrichtung
- 31: Hubwerk
- 32: Seilwinde
- 33: Elektromotor
- 34: Seil
- 35: Seilbefestigung
- 36: Bodenfenster der Laufkatze
- 37: Innenraum des Maschinenhauses
- 38: Gewicht
- 39: Schwenkeinrichtung
- 40: Kamera
- 41: Hubrichtung
- 42: Elektromotor
- 43: Elektromotor
- 44: Steuereinrichtung
- 45: Kommunikationseinrichtung
- 46: Fernsteuereinrichtung
- 47: Überwachungsstation
- 48: Bildschirm
- 49: Haken

## Patentansprüche

1. Überwachungsvorrichtung für eine Windkraftanlage, mit wenigstens einer in einem Windkraftanlagenmaschinenhaus (7) angeordneten Kamera (40), mittels welcher Bilder aus dem Inneren (37) des Maschinenhauses (7) aufnehmbar und Form von Bildinformation tragenden Signalen an wenigstens eine Überwachungsstation (47) übertragbar sind, **gekennzeichnet durch** einen in dem Maschinenhaus (7) montierten und die Kamera (4) tragenden Brückenkran (26) zum Heben von Lasten, mittels welchem die Kamera (40) in wenigstens zwei translatorische Richtungen (27, 30) in dem Maschinenhaus (7) bewegbar ist.

2. Überwachungsvorrichtung nach Anspruch 1, **dadurch gekennzeichnet, dass** der Brückenkran (26) eine in eine erste der translatorischen Richtungen (27) bewegbare Kranbrücke (25) und eine in eine zweite der translatorischen Richtungen (30) bewegbare Laufkatze (29) mit einem Hubwerk (31) umfasst, mittels welchem ein Hebemittel (34) relativ zu der Laufkatze (29) bewegbar ist, wobei die Kamera (40) an der Laufkatze (29), an dem Hubwerk (31) oder an dem Hebemittel (34) befestigt ist.

3. Überwachungsvorrichtung nach Anspruch 2, **dadurch gekennzeichnet, dass** die Kamera (40) an der Laufkatze (29), an dem Hubwerk (31) oder an dem Hebemittel (34) mittels einer Schwenkeinrichtung (39) befestigt ist, mittels welcher die Kamera (40) relativ zu der Laufkatze (29), dem Hubwerk (31) oder dem Hebemittel (34) schwenkbar ist.

4. Überwachungsvorrichtung nach Anspruch 2 oder 3, **dadurch gekennzeichnet, dass** die Kamera (40) an dem Hebemittel (34) befestigt und mittels des Hubwerks (31) in eine dritte translatorische Richtung (41) bewegbar ist.

5. Überwachungsvorrichtung nach Anspruch 4, **dadurch gekennzeichnet, dass** die drei translatorischen Richtungen (27, 30, 41) ein dreidimensionales Koordinatensystem aufspannen.

6. Überwachungsvorrichtung nach einem der Ansprüche 2 bis 5, **dadurch gekennzeichnet, dass** das Hebemittel (34) ein Seil, eine Kette oder ein anderes Zugmittel umfasst oder bildet.

7. Überwachungsvorrichtung nach einem der Ansprüche 2 bis 6, **dadurch gekennzeichnet, dass** das Hubwerk (31) eine Winde (32) umfasst, mittels welcher das Hebemittel (34) aufwickelbar und abwickelbar ist.

8. Überwachungsvorrichtung nach einem der Ansprüche 2 bis 7, **dadurch gekennzeichnet, dass** die Kranbrücke (25) im Abstand zum Boden (4) des Maschinenhauses (7) an einer oder mehreren maschinenhausfesten Führungsschienen (21) in die erste translatorische Richtung (27) bewegbar geführt ist und die Laufkatze (29) an einer oder mehreren kranbrückenfesten Führungsschienen (28) in die zweite translatorische Richtung (30) bewegbar geführt ist.

9. Überwachungsvorrichtung nach einem der vorangehenden Ansprüche, **gekennzeichnet durch** eine Fernsteuereinrichtung (46), mittels welcher der Brückenkran (26) von der Überwachungsstation (47) aus fernsteuerbar und somit die Kamera (40) in dem Maschinenhaus (7) bewegbar ist.

10. Verwendung eines in einem Maschinenhaus (7) einer Windkraftanlage (1) montierten und zum Heben von Lasten vorgesehen Brückenkrans (26) zum Bewegen einer in dem Maschinenhaus (7) angeordneten Kamera (40) in wenigstens zwei translatorische Richtungen (27, 30), wobei mittels der Kamera (40) Bilder aus dem Inneren (37) des Maschinenhauses (7) aufgenommen und Form von Bildinformation tragenden Signalen an wenigstens eine Überwachungsstation (47) übertragen werden.

## Claims

1. A monitoring device for a wind turbine with at least one camera (40) arranged in a wind turbine nacelle (7), by means of which images from the inside (37) of the nacelle (7) can be captured and transmitted in the form of signals carrying image information to at least one monitoring station (47), **characterised by** a bridge crane (26) that is mounted in the nacelle (7) and carries the camera (4) for lifting loads, by means of which the camera (40) is moveable in at least two translational directions (27, 30) in the nacelle (7).

2. Monitoring device according to Claim 1, **characterised in that** the bridge crane (26) comprises a crane bridge (25) which can be moved in a first translational direction (27) and a travelling trolley (29) with a hoist (31) which can be moved in a second translational direction (30), by means of which a lifting means (34) is moveable relative to the travelling trolley (29), wherein the camera (40) is attached to the travelling trolley (29), to the hoist (31) or to the lifting means (34).

3. Monitoring device according to Claim 2, **characterised in that** the camera (40) is attached to the travelling trolley (29), to the hoist (31) or to the lifting means (34) by means of a swivel device (39), by means of which the camera (40) can be swivelled relative to the travelling trolley (29), to the hoist (31) or to the lifting means (34).

4. Monitoring device according to Claim 2 or 3, **characterised in that** the camera (40) is attached to the lifting means (34) and can be moved by means of the hoist (31) in a third translational direction (41).

5. Monitoring device according to Claim 4, **characterised in that** the three translational directions (27, 30, 41) span a three-dimensional coordinate system.

6. Monitoring device according to any one of Claims 2 to 5, **characterised in that** the lifting means (34) comprises or forms a rope, a chain or another conveying means.

7. Monitoring device according to any one of Claims 2 to 6, **characterised in that** the hoist (31) comprises a winch (32), by means of which the lifting means (34) can be wound and unwound.

8. Monitoring device according to any one of Claims 2 to 7, **characterised in that** the crane bridge (25) is moveably guided at a distance from the base (4) of the nacelle (7) on one or several runners (21) fixed to the nacelle in the first translational direction (27) and the travelling trolley (29) is moveably guided on one or several runners (28) fixed to the crane bridge in the second translational direction (30).

9. Monitoring device according to any one of the preceding claims, **characterised by** a remote control device (46), by means of which the bridge crane (26) can be remotely controlled from the monitoring station (47) and consequently the camera (40) can be moved in the nacelle (7).

10. The use of a bridge crane (26) mounted in a nacelle (7) of a wind turbine (1) provided for lifting loads for moving a camera (40) arranged in the nacelle (7) in at least two translational directions (27, 30), wherein by means of the camera (40) images can be captured of the inside (37) of the nacelle (7) and transmitted in the form of signals carrying image information to at least one monitoring station (47).

## Revendications

1. Dispositif de surveillance d'une éolienne, avec au moins une caméra (40) disposée dans un carter de machine d'éolienne (7), au moyen de laquelle des images de l'intérieur (37) du carter de machine (7) peuvent être prises et des signaux portant des informations d'images peuvent être transmises à au moins une station de surveillance (47), **caractérisé par** la présence d'un pont roulant (26), monté dans le carter de machine (7) et portant la caméra (4), afin de lever les charges, au moyen duquel la caméra (40) peut être déplacée dans au moins deux directions de translation (27, 30) dans le carter de machine (7).

2. Dispositif de surveillance selon la revendication 1, **caractérisé en ce que** le pont roulant (26) comprend un pont (25) mobile dans une première direction de translation (27) et un chariot (29) mobile dans une deuxième direction de translation (30), avec un dispositif de levage (31), au moyen duquel un moyen de levage (34) peut être déplacé par rapport au chariot (29), la caméra (40) étant fixée au chariot (29), au dispositif de levage (31) ou au moyen de levage (34).

3. Dispositif de surveillance selon la revendication 2, **caractérisé en ce que** la caméra (40) est fixée au chariot (29), au dispositif de levage (31) ou au moyen de levage (34) au moyen d'un dispositif de pivotement (39), au moyen duquel la caméra (40) peut pivoter par rapport au chariot (29), au dispositif de levage (31) ou au moyen de levage (34).

4. Dispositif de surveillance selon la revendication 2 ou 3, **caractérisé en ce que** la caméra (40) est fixée au moyen de levage (34) et peut être déplacée au moyen du dispositif de levage (31) dans une troisième direction de translation (41).

5. Dispositif de surveillance selon la revendication 4, **caractérisé en ce que** les trois directions de translation (27, 30, 41) forment un système de coordonnées tridimensionnel.

6. Dispositif de surveillance selon l'une des revendications 2 à 5, **caractérisé en ce que** le moyen de levage (34) comprend ou est constitué d'un câble, d'une chaîne ou d'un autre moyen de traction.

7. Dispositif de surveillance selon l'une des revendications 2 à 6, **caractérisé en ce que** le dispositif de levage (31) comprend un treuil (32), au moyen duquel le moyen de levage (34) peut être enroulé et déroulé.

8. Dispositif de surveillance selon l'une des revendications 2 à 7, **caractérisé en ce que** le pont roulant (25) est guidé de manière mobile à une distance du fond (4) du carter de machine (7) le long d'un ou de plusieurs rails de guidage (21) fixés au carter de machine dans la première direction de translation (27) et le chariot (29) est guidé de manière mobile le long d'un ou de plusieurs rails de guidage (28) fixés au pont dans la deuxième direction de translation (30).

9. Dispositif de surveillance selon l'une des revendications précédentes, **caractérisé par** un dispositif de commande à distance (46) au moyen duquel le pont roulant (26) peut être commandé à distance à partir de la station de surveillance (47) et la caméra (40) peut ainsi être déplacée dans le carter de machine (7).

10. Utilisation d'un pont roulant (26), monté dans un carter de machine (7) d'une éolienne (1) et prévu pour lever des charges, pour déplacer une caméra (40) disposée dans le carter de machine (7) dans au moins deux directions de translation (27, 30), la caméra (40) permettant de prendre des images de l'intérieur (37) du carter de machine (7) et de transmettre des signaux portant des informations d'images à au moins une station de surveillance (47).
